# EUROPÄISCHE PATENTSCHRIFT

(11) **EP 4 384 438 B1**
(45) Veröffentlichungstag und Bekanntmachung des Hinweises auf die Patenterteilung: **22.10.2025**
(21) Anmeldenummer: 22757919.0
(22) Anmeldetag: 27.07.2022
(51) Int. Cl.: B62M 6/55, B62M 11/14

(54) **ANTRIEBSANORDNUNG FÜR EIN FAHRRAD UND FAHRRAD**
DRIVE ASSEMBLY FOR A BICYCLE, AND BICYCLE
ENSEMBLE D'ENTRAÎNEMENT POUR BICYCLETTE, ET BICYCLETTE

(30) Priorität: 10.08.2021 DE 102021208703
(43) Veröffentlichungstag der Anmeldung: 19.06.2024
(73) Patentinhaber: ZF Friedrichshafen AG, 88046 Friedrichshafen (DE)
(72) Erfinder: ZIEMER, Peter, 86825 Bad Woerishofen (DE)
(74) Vertreter: ZF Friedrichshafen AG
(86) Internationale Anmeldenummer: PCT/EP2022/071033
(87) Internationale Veröffentlichungsnummer: WO 2023/016801

(56) Entgegenhaltungen:
- WO-A1-2017/083970
- DE-A1- 102018 208 382
- DE-B3- 102021 208 703

## Beschreibung

Die vorliegende Erfindung bezieht sich auf eine Antriebsanordnung für ein Fahrrad sowie ein Fahrrad mit einer solchen Antriebsanordnung.

Die DE 10 2018 208 380 A1 beschreibt ein Mehrstufengetriebe in Planetenbauweise für ein Pedelec. Ein Elektromotor ist achsparallel zu dem Mehrstufengetriebe angeordnet und mit einer Getriebeausgangswelle mechanisch wirkverbunden oder wirkverbindbar, beispielsweise über ein optionales Schaltelement in Form einer Freilaufkupplung. Beim Pedalieren kann der Elektromotor so ausgekoppelt werden, um ein schleppmomentbehaftetes Mitdrehen im abgeschalteten Zustand zu vermeiden. Durch die Anbindung an die Getriebeausgangswelle ist zudem eine Lastschaltung möglich. So kann während eines Schaltvorgangs in dem Mehrstufengetriebe eine Last durch den Elektromotor aufgebracht werden und das Mehrstufengetriebe so in einen lastlosen Zustand versetzt werden.

DE 10 2018 208 382 A1 zeigt ein Tretlagergetriebe in Planetenbauweise für ein Fahrrad oder ein Pedelec. Es hat eine Getriebeeingangswelle als Antrieb und eine Getriebeausgangswelle als Abtrieb. Es gibt drei Planetenradsätze, drei Freilaufkupplungen und drei Bremsen, um acht Gänge zu realisieren. Jedem Planetenradsatz sind eine Bremse und eine Freilaufkupplung zugeordnet. Ein Sonnenrad des ersten Planetenradsatzes kann über die erste Bremse festgesetzt werden. Ein Sonnenrad des zweiten Planetenradsatzes kann über die zweite Bremse festgesetzt werden. Ein Hohlrad des dritten Planetenradsatzes kann über die dritte Bremse festgesetzt werden.

WO 2017 / 083 970 A1 betrifft ein System zur Unterstützung der Bewegung eines E-Fahrrads, das eine magnetorheologische Fluidaktuator-Einheit verwendet. Diese Einheit kann eine variable Menge an Unterstützungskraft übertragen, die durch Sensoren und eine Prozessoreinheit gesteuert wird, um die Bewegung zu unterstützen.

Ein erster Aspekt der Erfindung betrifft eine Antriebsanordnung für ein Fahrrad. Die Antriebsanordnung kann ein Antriebsmoment zum Antreiben des Fahrrads bereitstellen, beispielsweise an einem Hinterrad. Die Antriebskraft kann dafür mit Muskelkraft und alternativ oder zusätzlich von einem Antriebsmotor bereitgestellt werden. Das Fahrrad kann ein Transportmittel für einen Menschen sein, welches beispielsweise zwei Laufräder und einen Lenker aufweist.

Die Antriebsanordnung weist ein Tretlagergetriebe auf. Das Tretlagergetriebe ist dazu ausgebildet, ein Drehmoment an ein Laufrad des Fahrrads zu übertragen, beispielsweise von einem Antrieb des Tretlagergetriebes. Das Tretlagergetriebe kann einen Antrieb und einen Abtrieb aufweisen. Ein Antrieb kann für ein Einspeisen einer zu übersetzenden Größe ausgebildet sein und ein Abtrieb zum Abgeben der übersetzten Größe. Das Tretlagergetriebe kann dazu ausgebildet sein, mehrere Gänge mit jeweils einem zugeordneten Übersetzungsverhältnis bereitzustellen. Das Tretlagergetriebe kann als mehrstufiges Tretlagergetriebe ausgebildet sein. Mit dem Getriebe kann ein Drehmoment von einem Eingang des Getriebes zu einem Ausgang des Getriebes übertragen werden. Beispielsweise ermöglicht es das Tretlagergetriebe, eine langsame Rotation an einem Eingang, beispielsweise von einer Tretkurbel, in eine schnellere Rotation an dem Ausgang des Tretlagergetriebes und damit beispielsweise an einem angetriebenen Rad des Fahrrads zu übersetzen. Bei jedem Gang kann ein festes mechanisches Übersetzungsverhältnis zwischen Antrieb und Abtrieb des Tretlagergetriebes vorliegen. Das Tretlagergetriebe kann beispielsweise in einem Tretlagergehäuse des Fahrrads gelagert sein. Der Abtrieb des Tretlagergetriebes kann permanent mechanisch mit dem Laufrad wirkverbunden oder beispielsweise über eine Freilaufkupplung wirkverbindbar sein. Die mechanische Wirkverbindung kann beispielsweise mit einer Kette, einem Riemen oder einem Stirntrieb bereitgestellt werden.

Beispielsweise kann es vorgesehen sein, dass die Antriebsanordnung eine Tretkurbelwelle aufweist. Die Antriebsanordnung kann dazu ausgebildet sein, dass ein Drehmoment von der Tretkurbelwelle an den Antrieb des Tretlagergetriebes übertragbar ist. Die Tretkurbelwelle kann beispielsweise in einem Tretlagergehäuse des Fahrrads gelagert sein. Die Tretkurbelwelle kann beispielsweise dazu ausgebildet sein, dass an der Tretkurbelwelle jeweilige Kurbeln mit Pedalen zum Antreiben des Fahrrads wenigstens teilweise mittels Muskelkraft antreibbar sind. Die Tretkurbelwelle kann beispielsweise permanent mit dem Antrieb des Tretlagergetriebes mechanisch wirkverbindbar sein oder mit dem Antrieb des Tretlagergetriebes permanent mechanisch wirkverbunden sein. Beispielsweise kann der Antrieb des Tretlagergetriebes durch die gleiche Welle gebildet sein wie die Tretkurbelwelle. Die Tretkurbelwelle kann als der Antrieb des Tretlagergetriebes ausgebildet sein. Die Tretkurbelwelle kann aber beispielsweise auch mittels eines Schaltelements, wie einer Freilaufkupplung, mit dem Antrieb des Tretlagergetriebes verbunden bzw. verbindbar sein. Die Tretkurbelwelle kann sich axial auf einer zentralen Drehachse des Tretlagergetriebes zentral vollständig durch das Tretlagergetriebe erstrecken.

Die Antriebsanordnung weist einen Antriebsmotor auf. Der Antriebsmotor weist einen Abtrieb auf. Der Abtrieb des Antriebsmotor kann beispielsweise einem Rotor des Antriebsmotors entsprechen. Der Abtrieb des Antriebsmotors kann durch eine Ausgangswelle des Antriebsmotors gebildet sein. Der Antriebsmotor kann beispielsweise als Elektromotor ausgebildet sein. Der Elektromotor kann zur Rekuperation ausgebildet sein. Mittels des Antriebsmotors kann beispielsweise ein Antriebsmoment bereitgestellt werden. Die Antriebsanordnung mit Antriebsmotor kann ein motorisch unterstütztes Fahrrad ermöglichen und beispielsweise in einem Pedelec verwendet werden. Der Elektromotor kann dazu ausgebildet sein, eine elektrische Energie in ein Antriebsmoment umzuwandeln. Die Antriebsanordnung kann eine Steuervorrichtung und eine Stromquelle, wie eine Batterie, für den Antriebsmotor aufweisen. Der Antriebsmotor kann den Fahrer des Fahrrads beim Vortrieb unterstützen. Zudem kann der Antriebsmotor während der Schaltung des Tretlagergetriebes die Last übernehmen und damit beispielsweise im Tretlagergetriebe einen lastfreien Schaltvorgang ermöglichen. Bei abgeschaltetem Antriebsmotor kann dieser beispielsweise vom Antriebsstrang bzw. dem Tretlagergetriebe entkoppelt werden, um Schleppmomente zu vermeiden. Der Antriebsmotor kann achsparallel zu dem Tretlagergetriebe angeordnet sein.

Die Antriebsanordnung weist eine Planetenbaugruppe auf. Die Planetenbaugruppe ist zur Drehmomentübertragung von dem Abtrieb des Antriebsmotors an das Laufrad des Fahrrads ausgebildet. Die Planetenbaugruppe weist einen ersten Planetenradsatz mit einem ersten Drehelement, einem zweiten Drehelement und einem dritten Drehelement auf. Zudem weist die Planetenbaugruppe ein stationäres Bauteil auf. Außerdem weist die Planetenbaugruppe ein Bremsenschaltelement auf. Dadurch kann ein Antriebsmoment des Antriebsmotors mit unterschiedlichen Übersetzungen eingespeist werden. Die Drehelemente können beispielsweise als Sonnenrad, Hohlrad und Planetenträger ausgebildet sein. Mittels jeweiliger an dem Planetenträger drehbar gelagerter Planetenräder, welche mit dem Sonnenrad und alternativ oder zusätzliche dem Hohlrad kämmen, können die Drehelemente eines Planetenradsatzes mechanisch miteinander wirkverbunden sein. Im Vergleich zu einer Anbindung des Antriebsmotors mittels jeweiliger Stirnradstufen kann die Planetenbaugruppe kompakter sein. Zudem können einfach zusätzliche Funktionen integriert werden. Solche Zusatzfunktionen können eine Blockierung sein, um eine Wegfahrsperre, eine Parksperre und alternativ oder zusätzlich einen Diebstahlschutz bereitzustellen. Auch eine Hillholder-Funktion, eine Rekuperation und alternativ oder zusätzlich eine Rückfahrunterstützung kann so integriert werden. Zudem kann eine Planetenbaugruppe besser als ein Stirnradgetriebe hohen Anforderungen gerecht werden, wie diese bei langen Bergfahrten und hohen Transportlasten auftreten können. Damit ist die Antriebsanordnung besonders geeignet für e-Mountainbikes und elektrisch unterstütze Lastenräder. Die Planetenbaugruppe kann schaltbar ausgebildet sein, um unterschiedliche Drehmomentübertragungen von dem Antriebsmotor an das Laufrad zu ermöglichen und alternativ oder zusätzlich Zusatzfunktionen zu aktivieren bzw. zu deaktivieren. Zudem kann die Planetenbaugruppe dazu ausgebildet sein, den Antriebsmotor auszukuppeln. Der Abtrieb des Antriebsmotors kann mit dem Laufrad zur Drehmomentübertragung wirkverbindbar sein.

Das erste Drehelement ist mit dem Abtrieb des Antriebsmotors mechanisch wirkverbunden, beispielsweise permanent mechanisch wirkverbunden. Die Abtriebswelle des Antriebsmotors kann beispielsweise mit dem ersten Drehelement einstückig ausgebildet sein. Das zweite Drehelement ist als Abtrieb der Planetenbaugruppe ausgebildet. An dem Abtrieb der Planetenbaugruppe bzw. dem zweiten Drehelement kann die übersetzte Größe dem Laufrad bereitgestellt werden. Das dritte Drehelement ist mittels des Bremsenschaltelements an dem stationären Bauteil festsetzbar. Dadurch kann beispielsweise eine Übersetzung verändert werden oder der Antriebsmotor vom Laufrad abgekoppelt werden.

Unter einer permanent drehfesten Verbindung zweier Elemente wird eine Verbindung verstanden, bei welcher die beiden Elemente zu allen bestimmungsgemäßen Zuständen des Getriebes im Wesentlichen starr miteinander gekoppelt sind. Die Elemente können dabei als drehfest miteinander verbundene Einzelkomponenten oder auch einstückig vorliegen. Sind zwei Elemente hingegen mechanisch wirkverbunden, so sind diese unmittelbar oder mittelbar derart miteinander gekoppelt, dass eine Bewegung des einen Elements eine Reaktion des anderen Elements bewirkt. Zwischen den Elementen können dabei weitere Elemente, beispielsweise eine oder mehrere Stirnradstufen, vorgesehen sein. Sind zwei Elemente miteinander verbindbar, können diese Elemente mittels eines Schaltelements, beispielsweise durch dessen Betätigung, wahlweise voneinander getrennt oder miteinander verbunden werden.

Das Bremsenschaltelement kann ein reibschlüssiges Schaltelement sein, wie beispielsweise eine Lamellenkupplung. Die jeweiligen Bremsenschaltelemente können dazu ausgebildet sein, eine Rotation eines damit verbundenen Drehelements zu verhindern oder, beispielsweise bis zu einem Stopp, zu reduzieren. Ein Schaltelement kann dazu ausgebildet sein, zwei Drehelemente schaltbar drehfest miteinander zu verbinden. Ein Bremsenschaltelement ist ein Schaltelement, welches dazu ausgebildet sein, ein Drehelement schaltbar drehfest mit dem stationären Bauteil zu verbinden. Ist ein Schaltelement, beispielsweise eine Kupplung, zwischen zwei Elementen der Antriebsanordnung vorgesehen, so sind diese Drehelemente nicht permanent drehfest miteinander verbunden, jedoch über das Schaltelement drehfest miteinander verbindbar. Eine drehfeste Verbindung wird erst durch Betätigung oder selbsttätigen Zustandswechsel des zwischenliegenden Schaltelements herbeigeführt. Dabei kann eine Betätigung des Schaltelements bedeuten, dass dieses in einen geschlossenen Zustand überführt wird, sodass die an das Schaltelement unmittelbar angekoppelten Bauelemente in ihren Drehbewegungen aneinander angeglichen werden. Ist das betroffene Schaltelement als formschlüssiges Schaltelement ausgebildet, werden die hierüber unmittelbar drehfest miteinander verbundenen Bauelemente unter gleicher Drehzahl laufen. Ein Beispiel für ein formschlüssiges Schaltelement ist eine Klauenkupplung. Im Falle eines reibschlüssigen Schaltelements können, auch nach einem Betätigen desselbigen, Drehzahlunterschiede zwischen den Bauelementen bestehen. Dieser gewollte oder auch ungewollte Zustand wird hier dennoch als drehfeste Verbindung der jeweiligen Bauelemente bezeichnet. Bei einer reibschlüssigen Verbindung kann beispielsweise aufgrund eines Schlupfs eine gewisse Drehzahldifferenz zwischen den zwei miteinander verbundenen Elementen vorliegen. Die Schaltelemente können durch eine Schaltvorrichtung, beispielsweise mittels eines Kabelzugs einer Handschaltung, aktiv betätigt werden.

Das Bremsenschaltelement kann auch als Bremsenfreilauf ausgebildet sein. Der Bremsenfreilauf blockiert in eine Drehrichtung das damit verbundene Drehelement, indem dieses an dem stationären Bauteil festgesetzt wird. Dies wird auch als Sperrrichtungszustand bezeichnet. In eine entgegengesetzte Drehrichtung wird ein Freilauf bereitgestellt, beispielsweise indem das mit dem Bremsenfreilauf verbundene Drehelement nicht an dem stationären Bauteil festgesetzt wird. Dies wird auch als Überholtriebzustand bezeichnet.

Das stationäre Bauteil kann beispielsweise ein Gehäuse des Getriebes oder auch ein Abschnitt eines Fahrradrahmens sein. Ein stationäres Bauteil kann beispielsweise ein relativ zu den Drehelementen des Getriebes unbewegliches Bauteil sein. Das stationäre Bauteil kann auch durch mehrere voneinander beabstandete Elemente gebildet sein.

In einer Ausführungsform ist es vorgesehen, dass das zweite Drehelement mit dem Abtrieb des Tretlagergetriebes mechanisch wirkverbunden ist. Dadurch kann ein Drehmoment des Antriebsmotors an dem Abtrieb des Tretlagergetriebes in den Antriebsstrang des Fahrrads eingespeist werden. Dadurch wird ein Achsversatz ermöglicht. Die mechanische Wirkverbindung kann beispielsweise durch eine Kette, einen Riemen oder einen Stirntrieb bereitgestellt werden. Ein Ritzel, welches in die Kette oder Riemen eingreift oder Teil des Stirntriebs bildet, kann beispielsweise permanent drehfest mit dem zweiten Drehelement verbunden sein.

In einer Ausführungsform ist es vorgesehen, dass der erste Planetenradsatz als Minus-Planetenradsatz ausgebildet ist. Ein Minus-Planetenradsatz kann kompakt sein und einen hohen Wirkungsgrad aufweisen. Das erste Drehelement kann als Sonnenrad ausgebildet sein. Das zweite Drehelement kann als Planetenträger ausgebildet sein. Das dritte Drehelement kann als Hohlrad ausgebildet sein. Ein Minus-Planetenradsatz hat eine negative und ein Plus-Planetenradsatz eine positive Standübersetzung. An dem Planetenträger können Planetenräder drehbar gelagert sein. Bei Minus-Planetenradsätzen ist ein Satz von Planetenrädern üblicherweise ausreichend, wodurch sich Kosten- und Reibungsvorteile ergeben können. Jeweilige Planetenräder eines Planetenradsatzes können bei dem Minus-Planetenradsatz mit dessen Hohlrad und dessen Sonnenrad kämmen.

Für eine andere Übersetzung kann bei dem Minus-Planetenradsatz das erste Drehelement als Hohlrad ausgebildet sein und das dritte Drehelement als Sonnenrad.

Alternativ kann der erste Planetenradsatz als Plus-Planetenradsatz ausgebildet sein. Das zweite Drehelement kann in diesem Fall als Hohlrad ausgebildet sein und das dritte Drehelement als Planetenträger. Der Plus-Planetenradsatz kann zwei Sätze von Planetenrädern aufweisen. Die Planetenräder eines Satzes können mit dem ersten Sonnenrad und die Planetenräder eines anderen Satzes mit dem ersten Hohlrad kämmen. Jeweilige Planetenräder der zwei Sätze von Planetenrädern können dann paarweise miteinander kämmen.

In einer Ausführungsform ist es vorgesehen, dass das erste Bremsenschaltelement als Bremsenfreilauf ausgebildet ist. Ein Bremsenfreilauf kann ein Bremsenschaltelement sein, welches selbsttätig seinen Zustand wechselt. Ein Bremsenfreilauf kann eine Freilaufkupplung sein, welche ein Drehelement mit dem stationären Bauteil verbindet und damit festsetzt. Eine Freilaufkupplung kann eine nur in eine Drehrichtung wirkende Kupplung sein. Zwei miteinander mittels einer Freilaufkupplung drehfest verbindbare Elemente sind in einer Drehrichtung dieser beiden Elemente relativ zueinander permanent drehfest miteinander verbunden. Drehfest miteinander verbundene Elemente laufen mit der gleichen Drehzahl. In einer entgegengesetzten relativen Drehrichtung, was auch einem Überholen des antreibenden Elements durch das angetriebene Element entsprechen kann, sind die beiden Elemente nicht mittels der Freilaufkupplung miteinander verbunden bzw. voneinander entkoppelt. Bei einer Umkehr der relativen Drehrichtung von einer Freilaufrichtung in eine Kupplungsrichtung kann die Freilaufkupplung selbsttätig sperren. Die Freilaufkupplung kann beispielsweise als Sperrklinkenfreilauf oder Klemmrollenfreilauf ausgebildet sein. Eine Freilaufkupplung kann ein Schaltelement sein, welches nicht aktiv geschaltet werden muss. Dadurch kann das Getriebe verschachtelter und kompakter sein. Beispielsweise wird ein Bremsenfreilauf nicht betätigt und muss deshalb zum Betätigen auch nicht zugänglich sein. Dadurch kann ein Bremsenfreilauf bei der Radsatzanordnung radial von außen von einer Hohlwelle oder einem anderen Drehelement eingefasst sein. Gegenüber beispielsweise einem Kupplungsfreilauf am ersten Drehelement des ersten Planetenradsatzes kann eine niedrigere Differenzdrehzahl im Überholtrieb vorliegen. Zudem können bei dem Bremsenfreilauf niedrigere Stützfaktoren gegenüber einem Kupplungsfreilauf am zweiten Drehelement auftreten.

Eine schaltbare Bremse kann ein schaltbares Element sein, welches ein Drehelement mit dem stationären Bauteil verbindet und damit festsetzt. Eine Bremse kann ein reibschlüssiges Schaltelement sein, wie beispielsweise eine Lamellenkupplung. Jeweilige Bremsen können durch eine Schaltvorrichtung, beispielsweise mittels eines Kabelzugs einer Handschaltung, aktiv betätigt werden. Eine Bremse ist hier einfach zu betätigen, da eines von zwei Bremsenelementen mit dem stationären Bauteil verbunden ist und damit im Betrieb nicht dreht. Die Aktivierung bzw. Deaktivierung der schaltbaren Bremse ist beispielsweise einfacher als die einer schaltbaren Kupplung, welche zwei Drehelemente drehfest miteinander verbinden kann. Die schaltbare Bremse kann frei von einem Freilauf sein. Die schaltbare Bremse kann es zudem ermöglichen, den Antriebsmotor beim Fahren mit dem Laufrad anzutreiben, um eine Rekuperation zu ermöglichen. So kann die effektive Reichweite erhöht werden. Zudem kann die Antriebsanordnung so auch eine Rückwärtsschiebeunterstützung mit dem Antriebsmotor bereitstellen.

In einer Ausführungsform ist es vorgesehen, dass die Antriebsanordnung ein zweites Bremsenschaltelement aufweist. Mittels des zweiten Bremsenschaltelements kann eines von dem ersten Drehelement und dem zweiten Drehelement an dem stationären Bauteil festsetzbar sein. Dadurch können zusätzliche Funktionen, wie eine Hillholder-Funktion oder eine Parksperre, mit einfachen Mitteln bereitgestellt werden. Das zweite Bremsenschaltelement kann als Teil der Planetenbaugruppe ausgebildet sein.

In der beanspruchten Ausführungsform ist es vorgesehen, dass das zweite Bremsenschaltelement als schaltbarer Bremsenfreilauf ausgebildet ist. Ein schaltbarer Bremsenfreilauf kann die Funktion einer schaltbaren Bremse und eines Bremsenfreilaufs kombinieren. Beispielsweise kann der schaltbarer Bremsenfreilauf in einer Drehrichtung das damit verbundene Drehelement selbsttätig an dem stationären Bauteil festsetzen und in einer entgegengesetzten Drehrichtung das damit verbundene Drehelement schaltbar an dem stationären Bauteil festsetzen. Durch den schaltbaren Bremsenfreilauf kann eine Hillholder-Funktion bereitgestellt werden. Ein schaltbarer Bremsenfreilauf kann dazu ausgebildet sein, in eine Drehrichtung des damit verbundenen Drehelements immer einen Freilauf bereitzustellen. In eine entgegengesetzte Drehrichtung wird das Drehelement dann bei betätigtem Bremsenschaltelement an dem stationären Bauteil festgesetzt. Sofern das Bremsenschaltelement nicht betätigt ist, wird auch in der entgegengesetzten Drehrichtung das Drehelement nicht an dem stationären Bauteil festgesetzt. Es gibt auch Ausführungsformen von schaltbaren Bremsenfreiläufen, bei welchen in eine Drehrichtung immer das damit verbundene Drehelement an dem stationären Bauteil festgesetzt ist, da der Freilauf sperrt. In der entgegengesetzten Drehrichtung ist das damit verbundene Drehelement in dieser Ausführungsform nur an dem stationären Bauteil festgesetzt, wenn der schaltbare Bremsenfreilauf betätigt ist und ansonsten wird in diese Drehrichtung keine Festsetzung bewirkt. Ein Bremsenschaltelement kann beispielsweise über eine im Gehäuse angeordnete Klinken, die in Wirkverbindung mit einer Schaltwalze stehen, betätigt werden. In einem Bremsring sind für eine formschlüssige Bremse die Klinke und deren Verzahnung beidseitig wirksam ausgeführt. Für einen formschlüssigen Bremsenfreilauf sind diese dagegen nur einseitig wirksam auszuführen. Dadurch kann der schaltbare Bremsenfreilauf kompakt in einem Bauelement bereitgestellt werden.

In der nicht beanspruchten Ausführungsform ist es vorgesehen, dass das zweite Bremsenschaltelement als schaltbare Bremse ausgebildet ist. Dadurch kann beispielsweise eine Parksperre bereitgestellt werden, da die Antriebsanordnung so blockiert werden kann. Dafür kann es erforderlich sein, dass das erste Bremsenschaltelement und das zweite Bremsenschaltelement jeweils als schaltbare Bremse ausgebildet sind. Zudem kann so eine Rekuperation möglich sein, beispielsweise wenn der Abtrieb der Antriebsanordnung permanent mit dem Laufrad mechanisch wirkverbunden ist, sowie eine Rückwärtsschiebeunterstützung.

In einer Ausführungsform ist es vorgesehen, dass die Antriebsanordnung einen zweiten Planetenradsatz und ein drittes Bremsenschaltelement aufweist. Dadurch können zusätzliche Übersetzungen für die Antriebskraft des Antriebsmotors bereitgestellt werden. Die Planetenbaugruppe kann ein viertes Drehelement, ein fünftes Drehelement und ein sechstes Drehelement aufweisen. Das Drehmoment von dem Antriebsmotor kann über den ersten Planetenradsatz und alternativ oder zusätzlich den zweiten Planetenradsatz an das Laufrad des Fahrrads übertragbar sein. Der zweite Planetenradsatz kann ebenfalls schaltbar sein, um eine Übersetzung zu verändern. Dadurch kann eine zweite Antriebskraftübersetzung bereitgestellt werden, um ein Anfahrmoment zu erhöhen und alternativ oder zusätzlich eine Steigfähigkeit des Fahrrads zu verbessern. Die Antriebsanordnung kann dabei frei von dem zuvor beschriebenen zweiten Bremsenschaltelement sein. Die Antriebsanordnung kann also beispielsweise lediglich das erste und das dritte Bremsenschaltelement aufweisen. Die Nummerierung dient dann lediglich zur Zuordnung.

In einer Ausführungsform ist es vorgesehen, dass der zweite Planetenradsatz als Minus-Planetenradsatz ausgebildet ist. Eine solche Antriebsanordnung kann besonders effizient und kompakt sein. Das vierte Drehelement kann als Sonnenrad ausgebildet sein. Das fünfte Drehelement kann als Planetenträger ausgebildet sein. Das sechste Drehelement kann als Hohlrad ausgebildet sein.

Das vierte Drehelement kann beispielsweise mit dem Abtrieb des Antriebsmotors mechanisch wirkverbunden sein. Beispielsweise kann das vierte Drehelement mit dem ersten Drehelement permanent drehfest verbunden sein. Das vierte Drehelement und das erste Drehelement können durch eine gemeinsame Welle gebildet sein. Das fünfte Drehelement kann mit dem zweiten Drehelement permanent drehfest verbunden sein. Das fünfte Drehelement kann beispielsweise als Abtrieb der Planetenbaugruppe ausgebildet sein. Beispielsweise kann das fünfte Drehelement und das zweite Drehelement durch eine gemeinsame Welle gebildet sein. Das fünfte Drehelement und das zweite Drehelement können permanent drehfest verbunden sein. Das sechste Drehelement kann mittels des dritten Bremsenschaltelements an dem stationären Bauteil festsetzbar sein.

Die Nummerierung der Drehelemente und der Planetenradsätze kann dabei lediglich der Zuordnung dienen. Jeweilige Planetenradsätze können frei von zusätzlichen, nicht beschriebenen Elementen sein. Die Antriebsanordnung kann frei von zusätzlichen, nicht beschriebenen Planetenradsätzen, Schaltelementen und anderen Komponenten sein.

In einer Ausführungsform ist es vorgesehen, dass das dritte Bremsenschaltelement als schaltbarer Bremsenfreilauf ausgebildet ist. Dadurch können zwei Gänge realisierbar sein. Für die Aktuierung können beispielsweise nur zwei Schaltstellungen erforderlich sein, insbesondere in Verbindung mit einem als Bremsenfreilauf ausgebildetem ersten Bremsenschaltelement. Das erste Bremsenschaltelement und das dritte Bremsenschaltelement können beispielsweise als Doppelschaltelement ausgebildet sein, welches nur eine wechselseitige Betätigung der beiden Bremsenschaltelemente erlaubt.

In einer Ausführungsform ist es vorgesehen, dass das dritte Bremsenschaltelement als schaltbare Bremse ausgebildet ist. Das dritte Bremsenschaltelement kann also frei von einem Freilauf sein. Dadurch können besonders viele Funktionen ermöglicht werden, wie eine Rückwärtsschiebeunterstützung und eine Wegfahrsperre. Zudem kann so auch bei zwei Gängen eine Rekuperation ermöglicht werden. Für die Wegfahrsperre können wenigstens zwei der Bremsenschaltelemente als schaltbare Bremse ausgebildet sein, welche gleichzeitig betätigbar sind. Beispielsweise kann das erste Bremsenschaltelement und das dritte Bremsenschaltelement gleichzeitig betätigbar sein, um die Planetenbaugruppe zu blockieren.

Ein zweiter Aspekt der Erfindung betrifft ein Fahrrad. Das Fahrrad weist eine Antriebsanordnung gemäß dem ersten Aspekt auf. Jeweilige weitere Merkmale, Ausführungsformen und Vorteile sind den Beschreibungen des ersten Aspekts zu entnehmen.
Fig. 1 zeigt in einer schematischen Ansicht eine erste Ausführungsform einer Antriebsanordnung eines Fahrrads.
Fig. 2 zeigt in einer schematischen Ansicht eine zweite Ausführungsform der Antriebsanordnung des Fahrrads.
Fig. 3 zeigt in einer schematischen Ansicht eine dritte Ausführungsform der Antriebsanordnung des Fahrrads.
Fig. 4 zeigt in einer schematischen Ansicht eine vierte Ausführungsform der Antriebsanordnung des Fahrrads.
Fig. 5 zeigt in einer schematischen Ansicht eine fünfte Ausführungsform der Antriebsanordnung des Fahrrads.

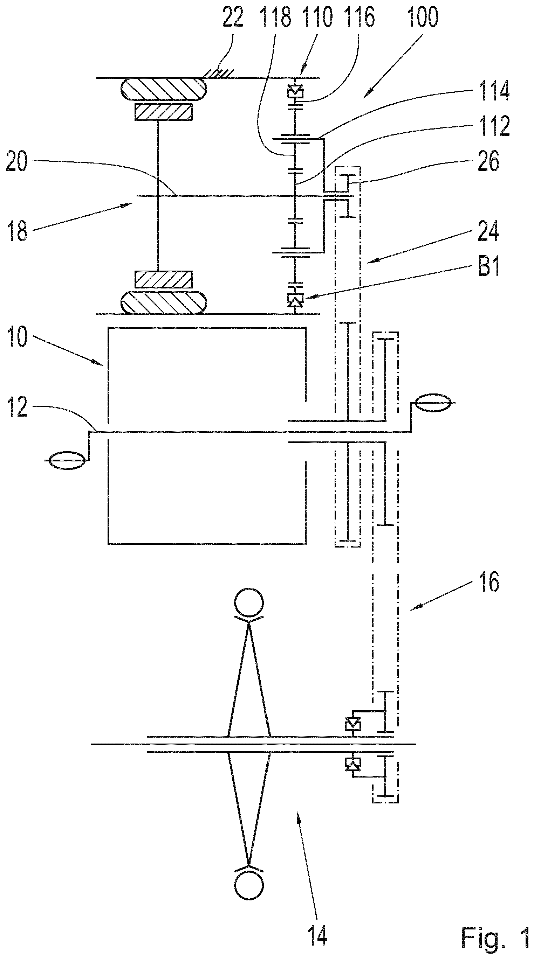

Fig. 1 zeigt eine erste Ausführungsform einer Antriebsanordnung 100 eines Fahrrads. Die Antriebsanordnung 100 weist ein mehrstufiges Tretlagergetriebe 10 auf, durch welches sich zentral eine Tretkurbelwelle 12 erstreckt. Das Tretlagergetriebe 10 wird von der Tretkurbelwelle 12 angetrieben und übersetzt dabei eine Antriebskraft für die Bereitstellung an einem Laufrad 14 des Fahrrads. Zu diesem Zweck ist ein Abtrieb des Tretlagergetriebes 10 mittels eines Sekundärtriebs 16 mit dem Laufrad 14 mechanisch wirkverbunden oder wirkverbindbar. In dem gezeigten Beispiel ist der Sekundärtrieb 16 als Kette oder Riemen ausgebildet. Das Laufrad 14 ist achsparallel zu dem Tretlagergetriebe 10 angeordnet.

Weiterhin weist die Antriebsanordnung 100 einen Antriebsmotor 18 mit einem Abtrieb 20, eine Planetenbaugruppe und ein stationäres Bauteil 22 auf. Der Abtrieb 20 ist mit einem Antrieb der Planetenbaugruppe permanent drehfest verbunden. Ein Abtrieb der Planetenbaugruppe ist mit dem Abtrieb des Tretlagergetriebes 10 mittels eines Primärtriebs 24 permanent mechanisch wirkverbunden und damit auch mit dem Laufrad 14 zur Drehmomentübertragung mechanisch wirkverbunden oder wirkverbindbar. Der Antriebsmotor 18 ist achsparallel zu dem Tretlagergetriebe 10 angeordnet.

Die Planetenbaugruppe weist einen ersten Planetenradsatz 110 mit einem ersten Drehelement in Form eines Sonnenrads 112 auf. Das Sonnenrad 112 bildet den Antrieb der Planetenbaugruppe und ist permanent drehfest mit dem Abtrieb 20 des Antriebsmotors 18 verbunden. Weiterhin weist der erste Planetenradsatz 110 ein zweites Drehelement in Form eines Planetenträgers 114 auf. Der Planetenträger 114 ist mit einem Ritzel 26 permanent drehfest verbunden, welcher einen Teil des Primärtriebs 24 bildet. An dem Ritzel ist eine Kette oder ein Riemen des Primärtriebs 24 in mechanischer Wirkverbindung gelagert. Der Planetenträger 114 bildet somit einen Abtrieb der Planetenbaugruppe. Zudem weist der erste Planetenradsatz 110 ein drittes Drehelement in Form eines Hohlrads 116 auf. An dem Planetenträger 114 sind ein oder mehrere Planetenräder 118 drehbar gelagert, welche jeweils mit dem Sonnenrad 112 und dem Hohlrad 116 kämmen.

Das Hohlrad 116 ist mittels eines ersten Bremsenschaltelements B1 an dem stationären Bauteil 22 festsetzbar. Bei der Antriebsanordnung 100 ist das erste Bremsenschaltelement B1 als Bremsenfreilauf ausgebildet. Sofern der Antriebsmotor 18 ein Antriebsmoment für das Laufrad 14 bereitstellt, wechselt das erste Bremsenschaltelement B1 selbsttätig in den Sperrrichtungszustand. Somit wird eine Übersetzung und mechanische Wirkverbindung zwischen dem Antriebsmotor 18 und dem Laufrad 14 bereitgestellt. Wenn kein Antriebsmoment für das Laufrad 14 bereitgestellt wird, wechselt das erste Bremsenschaltelement B1 selbsttätig in den Überholtriebzustand und ermöglicht somit, den Antriebsmotor 18 von dem Sekundärtrieb 16 abzukoppeln. Dadurch wird ein Schleppmoment reduziert.

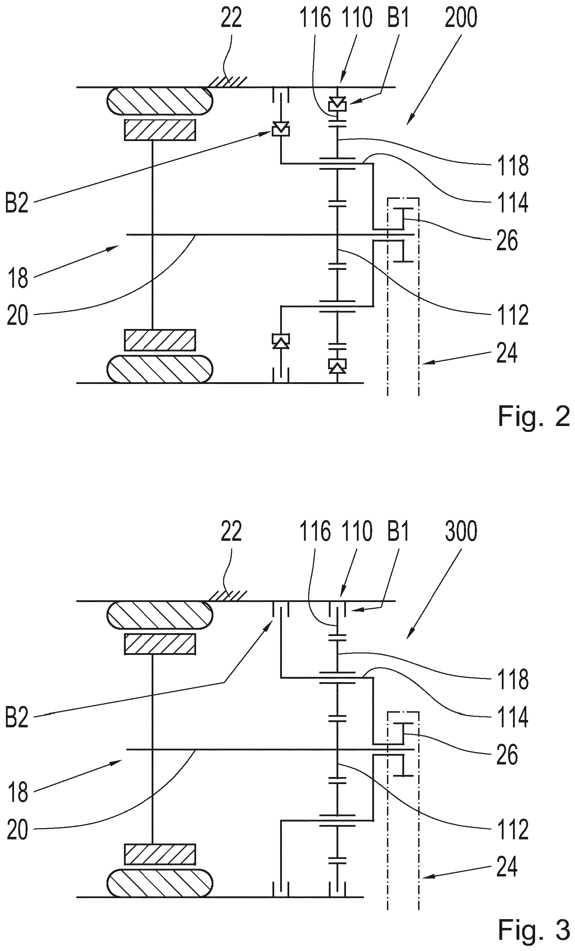

Fig. 2 zeigt eine zweite Ausführungsform einer Antriebsanordnung 200 eines Fahrrads, welche zu der ersten Ausführungsform ähnlich aufgebaut ist. Es werden entsprechend nur relevante Unterschiede erläutert. In Fig. 2 sind das Laufrad 14, das Tretlagergetriebe 10 und die Tretkurbelwelle 12 nicht dargestellt und der Sekundärtrieb 16 ist nur teilweise dargestellt.

Die Antriebsanordnung 200 unterscheidet sich von der Antriebsanordnung 100 dadurch, dass zusätzlich ein zweites Bremsenschaltelement B2 vorgesehen ist. Mittels des zweiten Bremsenschaltelements B2 ist der Planetenträger 114 an dem stationären Bauteil 22 festsetzbar. Das zweite Bremsenschaltelement B2 ist als schaltbarer Bremsenfreilauf ausgebildet. Das zweite Bremsenschaltelement wird in einer Ausführungsform mittels einer Schaltwalze betätigt und in einer anderen Ausführungsform mittels eines Magneten, welcher außenseitig des stationären Bauteils 22 angeordnet sein kann.

Ein Leerlauf und damit ein Auskuppeln des Antriebsmotors 18 erfolgt durch Verstellen des zweiten Bremsenschaltelements B2. Das erste Bremsenschaltelement B1 wechselt bei sich bewegendem Laufrad 14 selbsttätig in den Überholtriebzustand. Um eine Antriebskraft von dem Antriebsmotor 18 dem Laufrad 14 bereitstellen zu können, wechselt das erste Bremsenschaltelement B1 selbsttätig in den Sperrrichtungszustand und setzt so das Hohlrad 116 an dem stationären Bauteil fest. Wird das zweite Bremsenschaltelement B2 betätigt und damit der Planetenträger 114 an dem stationären Bauteil festgesetzt, sofern der Freilauf des zweiten Bremsenschaltelements B2 greift, kann eine Hillholderfunktion bereitgestellt werden. Die Hillholderfunktion verhindert ein Rückwärtsrollen an einem Hang bzw. ein Rückwärtsdrehen der jeweiligen Drehelemente der Planetenbaugruppe und damit auch des Laufrads 14, ohne dass dafür eine Haltekraft oder Antriebskraft von dem Antriebsmotor 18 oder einem Fahrradfahrer bereitgestellt werden muss.

Fig. 3 zeigt eine dritte Ausführungsform einer Antriebsanordnung 300 eines Fahrrads, welche zu der zweiten Ausführungsform ähnlich aufgebaut ist. Es werden entsprechend nur relevante Unterschiede erläutert. In Fig. 3 sind das Laufrad 14, das Tretlagergetriebe 10 und die Tretkurbelwelle 12 ebenfalls nicht dargestellt und der Sekundärtrieb 16 ist nur teilweise dargestellt.

Bei der Antriebsanordnung 300 ist das erste Bremsenschaltelement B1 als schaltbare Bremse ausgebildet. Zudem ist das zweite Bremsenschaltelement B2 als schaltbare Bremse ausgebildet. Die Planetenbaugruppe der Antriebsanordnung 300 weist somit keinen Freilauf auf und muss für den Wechsel in jeden Zustand aktiv geschaltet werden.

Für eine Entkopplung von dem Antriebsmotor 18 von dem Laufrad 14 werden bei der Antriebsanordnung 300 das erste Bremsenschaltelement B1 und das zweite Bremsenschaltelement B2 in deren offenen Zustand verstellt, sodass weder das Hohlrad 116 noch der Planetenträger 114 an dem stationären Bauteil 22 festgesetzt sind. Für das Bereitstellen einer Antriebskraft durch den Antriebsmotor 18 an dem Laufrad 14 wird das erste Bremsenschaltelement B1 betätigt und damit das Hohlrad 116 an dem stationären Bauteil festgesetzt. Das zweite Bremsenschaltelement B2 bleibt im offenen Zustand, womit der Planetenträger 114 umlaufen kann. Um eine Parksperre bereitzustellen, wird das zweite Bremsenschaltelement B2 betätigt und somit der Planetenträger 114 an dem stationären Bauteil 22 festgesetzt. Dadurch wird der Abtrieb der Planetenbaugruppe blockiert. Entsprechend kann das Laufrad 14, welches mit dem Planetenträger 114 mechanisch wirkverbunden ist, nicht mehr rotieren und ist ebenfalls blockiert. Das erste Bremsenschaltelement B1 kann dabei betätigt oder unbetätigt sein.

In der in Fig. 3 gezeigten Ausführungsform werden das erste Bremsenschaltelement B1 und das zweite Bremsenschaltelement B2 über eine Schaltwalze betätigt.

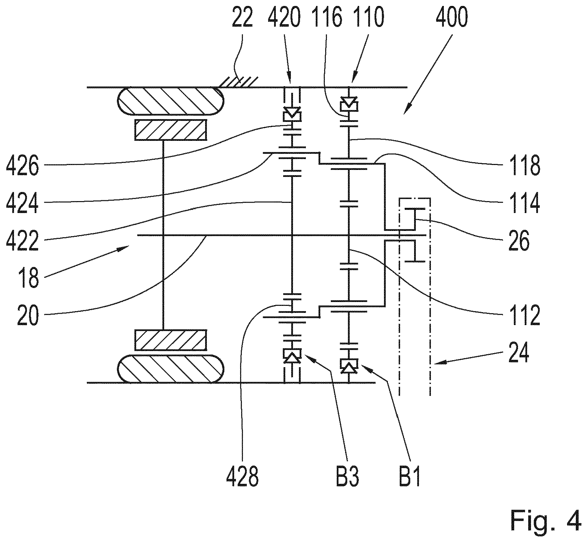

Fig. 4 zeigt eine vierte Ausführungsform einer Antriebsanordnung 400 eines Fahrrads, welche zu der ersten Ausführungsform ähnlich aufgebaut ist. Es werden entsprechend nur relevante Unterschiede erläutert. In Fig. 4 sind das Laufrad 14, das Tretlagergetriebe 10 und die Tretkurbelwelle 12 ebenfalls nicht dargestellt und der Sekundärtrieb 16 ist nur teilweise dargestellt.

Die Antriebsanordnung 400 weist einen zweiten Planetenradsatz 420 auf. Der zweite Planetenradsatz 420 weist ein viertes, fünftes und sechste Drehelement auf. Das vierte Drehelement ist als Sonnenrad 422 ausgebildet. Das Sonnenrad 422 des zweiten Planetenradsatzes 420 ist mit dem Abtrieb 20 des Antriebsmotors 18 und damit dem Sonnenrad 112 des ersten Planetenradsatzes 110 permanent drehfest verbunden. Das fünfte Drehelement ist als Planetenträger 424 ausgebildet. Der Planetenträger 424 des zweiten Planetenradsatzes 420 ist mit dem Planetenträger 114 des ersten Planetenradsatzes 110 permanent drehfest verbunden. Das sechste Drehelement ist als Hohlrad 426 ausgebildet. An dem Planetenträger 424 sind jeweilige Planetenräder 428 des zweiten Planetenradsatzes 420 drehbar gelagert. Die Planetenräder 428 des zweiten Planetenradsatzes 420 kämmen mit dem Hohlrad 426 des zweiten Planetenradsatzes 420 und mit dem Sonnenrad 422 des zweiten Planetenradsatzes 420.

Zudem weist die Antriebsanordnung 400 ein drittes Bremsenschaltelement B3 auf. Das zweite Bremsenschaltelement B2 der Ausführungsformen gemäß Fig. 2 und Fig. 3 entfällt dagegen.

Das dritte Bremsenschaltelement B3 ist als schaltbarer Bremsenfreilauf ausgebildet, analog zu dem zweiten Bremsenschaltelement B2 bei der Ausführungsform gemäß Fig. 2. Damit kann die Antriebsanordnung 400 zwei Übersetzungen bzw. zwei Gänge zur Drehmomentübertragung von dem Antriebsmotor 18 zu dem Laufrad 14 bereitstellen. Für einen ersten Gang wechselt das erste Bremsenschaltelement B1 selbsttätig in den Sperrrichtungszustand, wenn das dritte Bremsenschaltelement B3 geöffnet wurde bzw. unbetätigt ist und eine Antriebskraft durch den Antriebsmotor 18 bereitgestellt wird. Für den zweiten Gang wechselt das erste Bremsenschaltelement B1 selbsttätig in den Überholtriebzustand, wenn das dritte Bremsenschaltelement B3 betätigt bzw. geschlossen wurde und eine Antriebskraft durch den Antriebsmotor 18 bereitgestellt wird. Zudem stellt die Antriebsanordnung 400 eine Hillholderfunktion bereit, wenn das dritte Bremsenschaltelement B3 betätigt bzw. geschlossen wurde und eine Differenz zwischen der Antriebskraft des Antriebsmotors 18 wird und eine Kraft in Rückwärtsfahrrichtung auf das Laufrad 14 wirkende Kraft andernfalls ein Rückwärtsrollen bedingen würde. In diesem Fall wechselt das erste Bremsenschaltelement B1 selbsttätig in den Sperrrichtungszustand und blockiert so ein Rückwärtsrollen des Fahrrads.

In der in Fig. 4 gezeigten Ausführungsform werden das erste Bremsenschaltelement B1 und das dritte Bremsenschaltelement B3 über eine Schaltwalze betätigt.

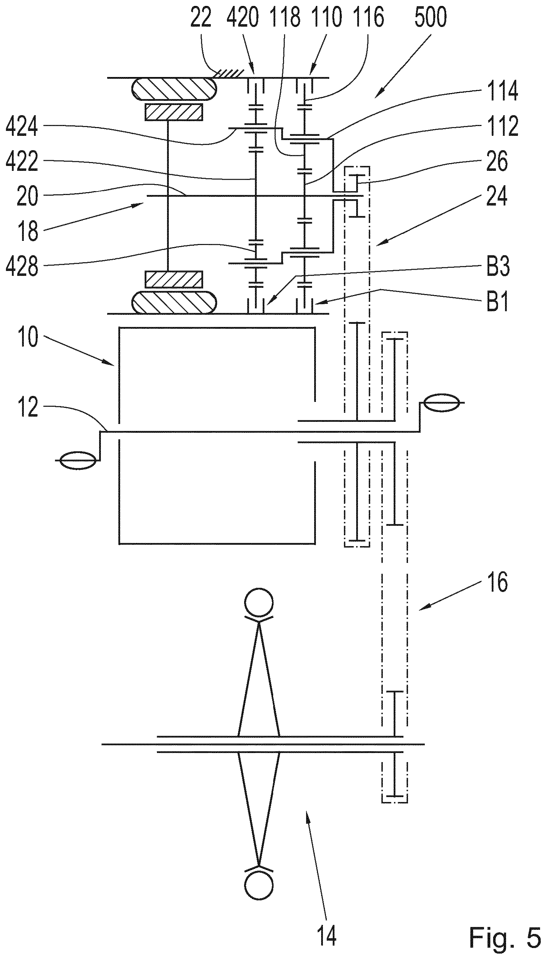

Fig. 5 zeigt eine fünfte Ausführungsform einer Antriebsanordnung 500 eines Fahrrads, welche zu der vierten Ausführungsform ähnlich aufgebaut ist. Es werden entsprechend nur relevante Unterschiede erläutert. In Fig. 5 sind das Laufrad 14, das Tretlagergetriebe 10, die Tretkurbelwelle 12 und der Sekundärtrieb 16 wieder voll dargestellt.

Im Unterschied zu der Antriebsanordnung 400 sind das erste Bremsenschaltelement B1 und das dritte Bremsenschaltelement B3 bei der Antriebsanordnung 500 jeweils als schaltbare Bremsen ausgebildet. In der in Fig. 5 gezeigten Ausführungsform werden das erste Bremsenschaltelement B1 und das dritte Bremsenschaltelement B3 über eine Schaltwalze betätigt.

Der Antriebsmotor 18 kann deshalb bei dieser Ausführungsform dadurch ausgekoppelt werden, dass das erste Bremsenschaltelement B1 und das dritte Bremsenschaltelement B3 unbetätigt bzw. geöffnet sind. Ein erster Gang zur Übertragung von Kraft zwischen dem Antriebsmotor 18 und dem Laufrad 14 kann durch Betätigen des ersten Bremsenschaltelements B1 bereitgestellt werden. Das dritte Bremsenschaltelement B3 ist dann unbetätigt und somit offen. Ein zweiter Gang zur Übertragung von Kraft zwischen dem Antriebsmotor 18 und dem Laufrad 14 kann durch Betätigen des dritten Bremsenschaltelements B3 bereitgestellt werden. Das erste Bremsenschaltelement B1 ist dann unbetätigt und somit offen. Eine Parksperre kann dadurch bereitgestellt werden, dass das erste Bremsenschaltelement B1 und das dritte Bremsenschaltelement B3 betätigt und damit geschlossen werden.

### Bezugszeichen

- 100; 200; 300; 400; 500: Antriebsanordnung
- 10: Tretlagergetriebe
- 12: Tretkurbelwelle
- 14: Laufrad
- 16: Sekundärtrieb
- 18: Antriebsmotor
- 20: Abtrieb
- 22: stationäres Bauteil
- 24: Primärtrieb
- 26: Ritzel
- 110: erster Planetenradsatz
- 112: Sonnenrad
- 114: Planetenträger
- 116: Hohlrad
- 118: Planetenräder
- 420: Planetenradsatz
- 422: Sonnenrad
- 424: Planetenträger
- 426: Hohlrad
- 428: Planetenräder
- B1, B2; B3: Bremsenschaltelement

## Patentansprüche

1. Antriebsanordnung (100; 200; 300; 400; 500) für ein Fahrrad mit einem Tretlagergetriebe (10), welches einen Antrieb und einen Abtrieb, welcher zur Drehmomentübertragung an ein Laufrad (14) des Fahrrads ausgebildet ist, aufweist, einem Antriebsmotor (18), welcher einen Abtrieb (20) aufweist, einer Planetenbaugruppe (110, 412), welche zur Drehmomentübertragung von dem Abtrieb (20) des Antriebsmotors (18) an das Laufrad (14) des Fahrrads ausgebildet ist und einen ersten Planetenradsatz (110) mit einem ersten Drehelement, einem zweiten Drehelement und einem dritten Drehelement aufweist, einem stationären Bauteil (22), und einem ersten Bremsenschaltelement (B1), wobei das erste Drehelement mit dem Abtrieb (20) des Antriebsmotors (18) mechanisch wirkverbunden ist, das zweite Drehelement als Abtrieb der Planetenbaugruppe (110) ausgebildet ist, und das dritte Drehelement mittels des Bremsenschaltelements (B1) an dem stationären Bauteil (22) festsetzbar ist, **dadurch gekennzeichnet, dass** das erste Bremsenschaltelement (B1) als Bremsenfreilauf ausgebildet ist.

2. Antriebsanordnung (100; 200; 300; 400; 500) nach Anspruch 1, **dadurch gekennzeichnet, dass** das zweite Drehelement mit dem Abtrieb des Tretlagergetriebes (10) mechanisch wirkverbunden ist.

3. Antriebsanordnung (100; 200; 300; 400; 500) nach Anspruch 1 oder 2, **dadurch gekennzeichnet, dass** der erste Planetenradsatz (110) als Minus-Planetenradsatz ausgebildet ist, wobei das erste Drehelement als Sonnenrad (112), das zweite Drehelement als Planetenträger (114) und das dritte Drehelement als Hohlrad (116) ausgebildet ist.

4. Antriebsanordnung (200; 300) nach einem der vorhergehenden Ansprüche, **dadurch gekennzeichnet, dass** die Antriebsanordnung (200) ein zweites Bremsenschaltelement (B2) aufweist, mittels welchem eines von dem ersten Drehelement und dem zweiten Drehelement an dem stationären Bauteil (22) festsetzbar ist.

5. Antriebsanordnung (200) nach Anspruch 4, **dadurch gekennzeichnet, dass** das zweite Bremsenschaltelement (B2) als schaltbarer Bremsenfreilauf ausgebildet ist.

6. Antriebsanordnung (300) nach Anspruch 4, **dadurch gekennzeichnet, dass** das zweite Bremsenschaltelement (B2) als schaltbare Bremse ausgebildet ist.

7. Antriebsanordnung (400; 500) nach einem der vorhergehenden Ansprüche, **dadurch gekennzeichnet, dass** die Antriebsanordnung (400) ein drittes Bremsenschaltelement (B3) aufweist und die Planetenbaugruppe (110; 420) einen zweiten Planetenradsatz (420) mit einem vierten Drehelement, einem fünften Drehelement und einem sechsten Drehelement aufweist.

8. Antriebsanordnung (400) nach Anspruch 6, **dadurch gekennzeichnet, dass** der zweite Planetenradsatz (420) als Minus-Planetenradsatz ausgebildet ist, wobei das vierte Drehelement als Sonnenrad (422), das fünfte Drehelement als Planetenträger (424) und das sechste Drehelement als Hohlrad (426) ausgebildet ist.

9. Antriebsanordnung (400; 500) nach Anspruch 7 oder 8, **dadurch gekennzeichnet, dass**, das vierte Drehelement mit dem Abtrieb (20) des Antriebsmotors (18) mechanisch wirkverbunden ist, das fünfte Drehelement mit dem zweiten Drehelement permanent drehfest verbunden ist und das sechste Drehelement mittels des dritten Bremsenschaltelements (B3) an dem stationären Bauteil (22) festsetzbar ist.

10. Antriebsanordnung (400) nach einem der Ansprüche 7 bis 8, **dadurch gekennzeichnet, dass** das dritte Bremsenschaltelement (B3) als schaltbarer Bremsenfreilauf ausgebildet ist.

11. Antriebsanordnung (500) nach einem der Ansprüche 7 bis 8, **dadurch gekennzeichnet, dass** das dritte Bremsenschaltelement (B3) als schaltbare Bremse ausgebildet ist.

12. Fahrrad mit einer Antriebsanordnung (100; 200; 300; 400; 500) nach einem der vorhergehenden Ansprüche.

## Claims

1. Drive arrangement (100; 200; 300; 400; 500) for a bicycle having a bottom bracket gear mechanism (10) which has a drive and an output which is designed for the transmission of torque to a running wheel (14) of the bicycle, a drive motor (18) which has an output (20), a planetary assembly (110, 412) which is designed for the transmission of torque from the output (20) of the drive motor (18) to the running wheel (14) of the bicycle and has a first planetary gear set (110) with a first rotational element, a second rotational element and a third rotational element, a stationary component (22), and a first brake switching element (B1), wherein the first rotational element is mechanically operatively connected to the output (20) of the drive motor (18), the second rotational element is designed as an output of the planetary assembly (110), and the third rotational element is fixable to the stationary component (22) by means of the brake switching element (B1), **characterized in that** the first brake switching element (B1) is designed as a brake freewheel.

2. Drive arrangement (100; 200; 300; 400; 500) according to Claim 1, **characterized in that** the second rotational element is mechanically operatively connected to the output of the bottom bracket gear mechanism (10).

3. Drive arrangement (100; 200; 300; 400; 500) according to Claim 1 or 2, **characterized in that** the first planetary gear set (110) is in the form of a minus planetary gear set, wherein the first rotational element is in the form of a sun gear (112), the second rotational element is in the form of a planet carrier (114) and the third rotational element is in the form of a ring gear (116).

4. Drive arrangement (200; 300) according to one of the preceding claims, **characterized in that** the drive arrangement (200) has a second brake switching element (B2), by means of which one of the first rotational element and the second rotational element is fixable to the stationary component (22).

5. Drive arrangement (200) according to Claim 4, **characterized in that** the second brake switching element (B2) is designed as a switchable brake freewheel.

6. Drive arrangement (300) according to Claim 4, **characterized in that** the second brake switching element (B2) is designed as a switchable brake.

7. Drive arrangement (400; 500) according to one of the preceding claims, **characterized in that** the drive arrangement (400) has a third brake switching element (B3), and the planetary assembly (110; 420) has a second planetary gear set (420) with a fourth rotational element, a fifth rotational element and a sixth rotational element.

8. Drive arrangement (400) according to Claim 6, **characterized in that** the second planetary gear set (420) is in the form of a minus planetary gear set, wherein the fourth rotational element is in the form of a sun gear (422), the fifth rotational element is in the form of a planet carrier (424) and the sixth rotational element is in the form of a ring gear (426).

9. Drive arrangement (400; 500) according to Claim 7 or 8, **characterized in that** the fourth rotational element is mechanically operatively connected to the output (20) of the drive motor (18), the fifth rotational element is permanently fixedly connected to the second rotational element for conjoint rotation, and the sixth rotational element is fixable to the stationary component (22) by means of the third brake switching element (B3).

10. Drive arrangement (400) according to either of Claims 7 and 8, **characterized in that** the third brake switching element (B3) is designed as a switchable brake freewheel.

11. Drive arrangement (500) according to either of Claims 7 and 8, **characterized in that** the third brake switching element (B3) is designed as a switchable brake.

12. Bicycle having a drive arrangement (100; 200; 300; 400; 500) according to one of the preceding claims.

## Revendications

1. Entraînement (100 ; 200 ; 300 ; 400 ; 500) pour une bicyclette présentant une transmission (10) de pédalier, qui présente un entraînement et une partie entraînée et qui est conçue pour la transmission d'un couple de rotation à une roue (14) de la bicyclette, un moteur d'entraînement (18), qui présente une partie entraînée (20), un module planétaire (110, 412), qui est réalisé pour la transmission d'un couple de rotation depuis la partie entraînée (20) du moteur d'entraînement (18) à la roue (14) de la bicyclette et un premier train épicycloïdal (110) présentant un premier élément rotatif, un deuxième élément rotatif et une troisième élément rotatif, un composant stationnaire (22) et un premier élément de commutation de freinage (B1), le premier élément rotatif étant relié de manière mécaniquement active à la partie entraînée (20) du moteur d'entraînement (18), le deuxième élément rotatif étant réalisé comme partie entraînée du module planétaire (110) et le troisième élément rotatif pouvant être fixé au composant stationnaire (22) au moyen de l'élément de commutation de freinage (B1), **caractérisé en ce que** le premier élément de commutation de freinage (B1) est réalisé comme un frein en roue libre.

2. Entraînement (100 ; 200 ; 300 ; 400 ; 500) selon la revendication 1, **caractérisé en ce que** le deuxième élément rotatif peut être relié de manière mécaniquement active à la partie entraînée de la transmission (10) de pédalier.

3. Entraînement (100 ; 200 ; 300 ; 400 ; 500) selon la revendication 1 ou 2, **caractérisé en ce que** le premier train épicycloïdal (110) est réalisé comme un train épicycloïdal négatif, le premier élément rotatif étant réalisé comme roue solaire (112), le deuxième élément rotatif étant réalisé comme porte-satellites (114) et le troisième élément rotatif étant réalisé comme roue à denture intérieure (116).

4. Entraînement (200 ; 300) selon l'une des revendications précédentes, **caractérisé en ce que** l'entraînement (200) présente un deuxième élément de commutation de freinage (B2), au moyen duquel un élément parmi le premier élément rotatif et le deuxième élément rotatif peut être fixé au composant stationnaire (22).

5. Entraînement (200) selon la revendication 4, **caractérisé en ce que** le deuxième élément de commutation de freinage (B2) est réalisé comme un frein en roue libre pouvant être commuté.

6. Entraînement (300) selon la revendication 4, **caractérisé en ce que** le deuxième élément de commutation de freinage (B2) est réalisé comme un frein pouvant être commuté.

7. Entraînement (400 ; 500) selon l'une des revendications précédentes, **caractérisé en ce que** l'entraînement (400) présente un troisième élément de commutation de freinage (B3) et le module planétaire (110 ; 420) présente un deuxième train épicycloïdal (420) pourvu d'un quatrième élément rotatif, d'un cinquième élément rotatif et d'un sixième élément rotatif.

8. Entraînement (400) selon la revendication 6, **caractérisé en ce que** le deuxième train épicycloïdal (420) est réalisé comme un train épicycloïdal négatif, le quatrième élément rotatif étant réalisé comme roue solaire (422), le cinquième élément rotatif étant réalisé comme porte-satellites (424) et le sixième élément rotatif étant réalisé comme roue à denture intérieure (426).

9. Entraînement (400 ; 500) selon la revendication 7 ou 8, **caractérisé en ce que** le quatrième élément rotatif est relié de manière mécaniquement active à la partie entraînée (20) du moteur d'entraînement (18), le cinquième élément rotatif est relié en permanence de manière solidaire en rotation avec les deuxième élément rotatif et le sixième élément rotatif peut être fixé au composant stationnaire (22) au moyen du troisième élément de commutation de freinage (B3).

10. Entraînement (400) selon l'une des revendications 7 à 8, **caractérisé en ce que** le troisième élément de commutation de freinage (B3) est réalisé comme un frein en roue libre.

11. Entraînement (500) selon l'une des revendications 7 à 8, **caractérisé en ce que** le troisième élément de commutation de freinage (B3) est réalisé comme un frein pouvant être commuté.

12. Bicyclette présentant un agencement (100 ; 200 ; 300 ; 400 ; 500) selon l'une des revendications précédentes.
